# EUROPÄISCHE PATENTANMELDUNG

(11) **EP 2 846 449 A2**
(43) Veröffentlichungstag der Anmeldung: **11.03.2015**
(21) Anmeldenummer: 14181680.1
(22) Anmeldetag: 20.08.2014
(51) Int. Cl.: H02M 3/335, H02M 1/42, B23K 9/10, H02M 1/00, B23K 9/00

(54) **Verfahren zum Minimieren der Oberwellenbelastung durch eine Schweißstromquelle und Schweißstromquelle zur Durchführung des Verfahrens**

(30) Priorität: 09.09.2013 DE 102013109827
(71) Anmelder: Lorch Schweisstechnik GmbH, 71549 Auenwald (DE)
(72) Erfinder: Aigner, Hubert, 4715 Taufkirchen/Tr. (AT)
(74) Vertreter: Hoeger, Stellrecht & Partner Patentanwälte

(57) **Zusammenfassung**

Die Erfindung betrifft ein Verfahren zum Minimieren der Oberwellenbelastung einer einphasigen Wechselspannungsquelle durch eine Schweißstromquelle (10), die eine erste Gleichrichterschaltung (14), eine passive Leistungsfaktor-Korrekturschaltung (16), eine getaktete Brückenschaltung (26), einen Resonanzkonverter (38) und eine zweite Gleichrichterschaltung (52) aufweist, wobei der Resonanzkonverter (38) einen Transformator (40) und einen Schwingkreis mit einer ersten Kapazität (44) und einer ersten Induktivität (42) aufweist. Um mit einer kostengünstig herstellbaren Schweißstromquelle die Oberwellenbelastung gering halten zu können, wird vorgeschlagen, dass man eine zweite Kapazität (48) und/oder eine zweite Induktivität parallel zum Transformator (40) schaltet oder dass man die Magnetisierungsinduktivität des Transformators (40) als zweite Induktivität nutzt, wobei das Verhältnis der ersten Kapazität (44) zur zweiten Kapazität (48) bei primärseitig angeordneter zweiten Kapazität (48) einem Wert aus dem Bereich von 1 bis 10 entspricht und bei sekundärseitig angeordneter zweiten Kapazität (48) dem Quotient aus einem Wert aus dem Bereich von 1 und 10 und dem Quadrat des Übersetzungsverhältnisses des Transformators (40) entspricht, und dass das Verhältnis der zweiten Induktivität (42) zur ersten Induktivität bei primärseitig angeordneter zweiten Induktivität einem Wert aus dem Bereich von 0,5 bis 10 entspricht und bei sekundärseitig angeordneter zweiten Induktivität dem Quotient aus einem Wert aus dem Bereich von 0,5 bis 10 und dem Quadrat des Übersetzungsverhältnisses des Transformators (40) entspricht. Außerdem wird eine Schweißstromquelle (10) zur Durchführung des Verfahrens vorgeschlagen.

## Beschreibung

Die Erfindung betrifft ein Verfahren zum Minimieren der Oberwellenbelastung einer einphasigen Wechselspannungsquelle durch eine Schweißstromquelle, die eine an die Wechselspannungsquelle anschließbare erste Gleichrichterschaltung, eine an den Ausgang der ersten Gleichrichterschaltung angeschlossene passive Leistungsfaktor-Korrekturschaltung, eine an den Ausgang der Leistungsfaktor-Korrekturschaltung angeschlossene getaktete Brückenschaltung, einen an den Ausgang der getakteten Brückenschaltung angeschlossenen Resonanzkonverter und eine an den Ausgang des Resonanzkonverters angeschlossene zweite Gleichrichterschaltung aufweist, an deren Ausgang eine Schweißelektrode und ein zu schweißendes Werkstück anschließbar sind, wobei der Resonanzkonverter einen Transformator und einen Schwingkreis mit einer ersten Kapazität und einer in Reihe zur ersten Kapazität geschalteten ersten Induktivität aufweist.

Außerdem betrifft die Erfindung eine Schweißstromquelle zur Durchführung des Verfahrens, mit einer ersten Gleichrichterschaltung, die eingangsseitig an eine einphasige Wechselspannungsquelle anschließbar ist und die ausgangsseitig über eine passive Leistungsfaktor-Korrekturschaltung mit einer getakteten Brückenschaltung verbunden ist, und mit einem Resonanzkonverter, der einen Transformator und zumindest einen Schwingkreis mit einer ersten Kapazität und einer in Reihe zur ersten Kapazität geschalteten ersten Induktivität aufweist und der primärseitig mit der Brückenschaltung und sekundärseitig mit einer zweiten Gleichrichterschaltung verbunden ist, an deren Ausgang eine Schweißelektrode und ein zu schweißendes Werkstück anschließbar sind. Derartige Schweißstromquellen kommen bei Lichtbogen-Schweißverfahren zum Einsatz, bei denen zwischen einer Schweißelektrode und einem Werkstück ein Lichtbogen brennt, so dass das lichtbogenseitige Ende der Schweißelektrode schmilzt und Werkstoff in Form von Tropfen auf das Werkstück übergeht. Bekannte Schweißstromquellen weisen häufig eine erste Gleichrichterschaltung auf, die die eingangsseitig bereitgestellte einphasige Wechselspannung in eine pulsierende Gleichspannung gleichrichtet. Um die Welligkeit der pulsierenden Gleichspannung zu reduzieren, kommen in der Regel Glättungskondensatoren zum Einsatz, die einer nachgeordneten getakteten Brückenschaltung eine Gleichspannung mit einer sehr geringen Restwelligkeit bereitstellen. Zur Steuerung der getakteten Brückenschaltung weisen die Schweißstromquellen üblicherweise eine Steuereinheit auf. In Abhängigkeit von Steuersignalen der Steuereinheit wird die bereitgestellte Gleichspannung von der Brückenschaltung in eine hochfrequente Wechselspannung gewandelt, die einem Resonanzkonverter zugeführt wird, dem eine zweite Gleichrichterschaltung nachgeordnet ist. Der Resonanzkonverter transformiert die hochfrequente Wechselspannung, die anschließend von der zweiten Gleichrichterschaltung gleichgerichtet wird. Die von der zweiten Gleichrichterschaltung bereitgestellte Gleichspannung liegt am Ausgang der Schweißstromquelle an und kann der Schweißelektrode und dem zu schweißenden Werkstück bereitgestellt werden.

Der Einsatz von Glättungskondensatoren zur Verringerung der Welligkeit der von der ersten Gleichrichterschaltung bereitgestellten Gleichspannung hat zur Folge, dass die Wechselspannungsquelle einer starken Oberwellenbelastung unterliegt. Häufig kommt als Wechselspannungsquelle ein öffentliches Spannungsversorgungsnetz zum Einsatz und die Oberwellenbelastung führt zu einer Verzerrung der Netzspannung. Um diese Verzerrung in Grenzen zu halten, werden von den Betreibern öffentlicher Spannungsversorgungsnetze Grenzwerte der Oberwellenbelastung vorgegeben, die von den Verbrauchern eingehalten werden müssen. Als Maß für die Oberwellenbelastung kann der Leistungsfaktor der Schweißstromquelle herangezogen werden. Der Leistungsfaktor ist definiert als das Verhältnis der Wirkleistung der Schweißstromquelle zu deren Scheinleistung. Im Idealfall, bei dem gar keine Oberwellen auftreten, beträgt der Leistungsfaktor genau 1. Je geringer der Leistungsfaktor ist, desto größer ist die Oberwellenbelastung des Spannungsversorgungsnetzes.

Um die Oberwellenbelastung zu reduzieren, wird in der US 6,091,612 eine Schweißstromquelle vorgeschlagen, bei der statt Glättungskondensatoren eine passive Leistungsfaktor-Korrekturschaltung zum Einsatz kommt, die der ersten Gleichrichterschaltung nachgeordnet ist und der getakteten Brückenschaltung eine Gleichspannung mit einer zwar reduzierten aber immer noch beachtlichen Welligkeit bereitstellt. Bei der bekannten Schweißstromquelle ist der Resonanzkonverter als Serienresonanzkonverter ausgestaltet. Er umfasst einen Transformator, der primärseitig einen seriellen Schwingkreis aufweist mit einer ersten Kapazität und einer in Reihe zu dieser geschalteten ersten Induktivität. Von der Schweißstromquelle wird eine zeitlich konstante Gleichspannung bereitgestellt. Die Höhe der Gleichspannung kann durch geeignete Steuerung der getakteten Brückenschaltung variiert werden.

Im Vergleich zu Schweißstromquellen, bei denen Glättungskondensatoren zum Einsatz kommen, hat die aus der US-Patentschrift 6,091,612 bekannte Schweißstromquelle den Vorteil, dass die Oberwellenbelastung des Spannungsversorgungsnetzes gering gehalten werden kann. Damit ist allerdings der Nachteil verbunden, dass die bekannte Schweißstromquelle stark überdimensioniert werden muss, um einen stabilen Lichtbogen zwischen der Schweißelektrode und dem Werkstück gewährleisten zu können. Dies hat seinen Grund darin, dass bei der Ausbildung des Lichtbogens kurzzeitig Schwankungen der Schweißspannung und des Schweißstromes auftreten können aufgrund von Änderungen der Lichtbogenlänge und/oder des Lichtbogenwiderstandes. Beispielsweise fällt bei einer kurzzeitigen Vergrößerung der Lichtbogenlänge der Schweißstrom stark ab und die Schweißspannung erhöht sich deutlich. Bei einer kurzzeitigen Verringerung der Lichtbogenlänge erhöht sich der Schweißstrom und die Schweißspannung fällt stark ab. Da die Schweißstromquelle diesen Strom- und Spannungsschwankungen gerecht werden muss, ist es bei der aus der US-Patentschrift 6,091,612 bekannten Schweißstromquelle erforderlich, sämtliche Bauteile der Schweißstromquelle, vor allem auch den Transformator, auf die kurzzeitig auftretenden Maximalwerte auszulegen. Im Vergleich zu den Strom- und Spannungsmittelwerten erfordert insbesondere die Kombination aus gleichzeitig auftretender maximaler Ausgangsspannung und minimaler Eingangsspannung eine Überdimensionierung der Schweißstromquelle. Dies ist mit nicht unbeträchtlichen Kosten verbunden.

Aufgabe der vorliegenden Erfindung ist es, ein Verfahren der eingangs genannten Art bereitzustellen, bei dem mit einer kostengünstig herstellbaren Schweißstromquelle die Oberwellenbelastung der Wechselspannungsquelle gering gehalten werden kann. Außerdem ist es Aufgabe der vorliegenden Erfindung, eine Schweißstromquelle zur Durchführung des Verfahrens bereitzustellen.

Diese Aufgabe wird bei einem Verfahren der gattungsgemäßen Art erfindungsgemäß dadurch gelöst, dass man eine zweite Kapazität und/oder eine zweite Induktivität parallel zur Primärseite oder parallel zur Sekundärseite des Transformators schaltet oder dass man die Magnetisierungsinduktivität des Transformators als zweite Induktivität nutzt, wobei man die erste und die zweite Kapazität derart dimensioniert, dass das Verhältnis der ersten Kapazität zur zweiten Kapazität bei primärseitig angeordneter zweiter Kapazität einem Wert aus dem Bereich von 1 bis 10 entspricht und bei sekundärseitig angeordneter zweiter Kapazität dem Quotient aus einem Wert aus dem Bereich von 1 bis 10 und dem Quadrat des Übersetzungsverhältnisses des Transformators entspricht, und/oder wobei man die erste und die zweite Induktivität derart dimensioniert, dass das Verhältnis der zweiten Induktivität zur ersten Induktivität bei primärseitig angeordneter zweiter Induktivität einem Wert aus dem Bereich von 0,5 bis 10 entspricht und bei sekundärseitig angeordneter zweiter Induktivität dem Quotient aus einem Wert aus dem Bereich von 0,5 bis 10 und dem Quadrat des Übersetzungsverhältnisses des Transformators entspricht.

Das erfindungsgemäße Verfahren zeichnet sich durch den kombinierten Einsatz einer passiven Leistungsfaktor-Korrekturschaltung und eines Resonanzkonverters aus, bei dem eine zweite Kapazität und/oder eine zweite Induktivität parallel zum Transformator geschaltet sind, wobei die zweite Kapazität und die zweite Induktivität eine spezielle Dimensionierung aufweisen.

Bei Einsatz einer zweiten Kapazität dimensioniert man die erste und die zweite Kapazität derart, dass das Verhältnis der ersten Kapazität zur zweiten Kapazität bei primärseitig angeordneter zweiter Kapazität einem Wert aus dem Bereich von 1 bis 10 entspricht. Wird die zweite Kapazität parallel zur Primärseite des Transformators geschaltet, so wird die erste Kapazität also derart dimensioniert, dass sie mindestens so groß ist wie die zweite Kapazität und maximal 10-mal so groß ist wie die zweite Kapazität. Wird die zweite Kapazität parallel zur Sekundärseite des Transformators geschaltet, so wird sie derart dimensioniert, dass das Verhältnis der ersten zur zweiten Kapazität dem Quotient aus einem Wert aus dem Bereich von 1 bis 10 und dem Quadrat des Übersetzungsverhältnisses des Transformators entspricht.

Unter dem Übersetzungsverhältnis des Transformators wird das Verhältnis der Anzahl der Primärwindungen zur Anzahl der Sekundärwindungen des Transformators verstanden.

Beträgt das Übersetzungsverhältnis des Transformators beispielsweise 10, so wird die erste Kapazität bei sekundärseitiger Anordnung der zweiten Kapazität derart dimensioniert, dass sie mindestens so groß ist wie ein Hundertstel der zweiten Kapazität und maximal so groß ist wie ein Zehntel der zweiten Kapazität.

Alternativ oder ergänzend zur zweiten Kapazität kann auch eine zweite Induktivität zum Einsatz kommen. Bei Einsatz einer parallel zum Transformator geschalteten zweiten Induktivität werden die erste und zweite Induktivität derart dimensioniert, dass das Verhältnis der zweiten zur ersten Induktivität bei primärseitiger Anordnung der zweiten Induktivität einem Wert aus dem Bereich von 0,5 bis 10 entspricht und dass das Verhältnis der zweiten zur ersten Induktivität bei sekundärseitiger Anordnung der zweiten Induktivität dem Quotient aus einem Wert aus dem Bereich von 0,5 bis 10 und dem Quadrat des Übersetzungsverhältnisses des Transformators entspricht.

Es kann vorgesehen sein, dass man die Magnetisierungsinduktivität des Transformators als zweite Induktivität nutzt. Ein separates Bauelement für eine parallel zum Transformator geschaltete zweite Induktivität kann dadurch entfallen.

Es hat sich gezeigt, dass durch den Einsatz der parallel zum Transformator geschalteten zweiten Kapazität und/oder durch den Einsatz der parallel zum Transformator geschalteten zweiten Induktivität zum einen die Oberwellenbelastung der einphasigen Wechselspannungsquelle gering gehalten werden kann und zum anderen die Bauteile der Schweißstromquelle auf die Nennwerte des Schweißstroms und der Schweißspannung ausgelegt werden können, das heißt auf die zeitlichen Mittelwerte des Schweißprozesses. Die erlaubt es, die Herstellungskosten der Schweißstromquelle zu reduzieren. Eine Überdimensionierung der Bauteile, wie sie bei der aus der US-Patentschrift 6,091,612 bekannten Schweißstromquelle erforderlich ist, ist beim erfindungsgemäßen Verfahren nicht notwendig. Kurzzeitig auftretenden Minimal- und Maximalwerten der Schweißspannung und des Schweißstromes wird man beim erfindungsgemäßen Verfahren durch die Bereitstellung der parallel zum Transformator geschalteten zweiten Kapazität und/oder der parallel zum Transformator geschalteten zweiten Induktivität gerecht, die in der voranstehend erläuterten Weise dimensioniert werden.

Die Anordnung einer zweiten Kapazität und/oder einer zweiten Induktivität parallel zum Transformator hat zur Folge, dass die zweite Kapazität und/oder die zweite Induktivität auch parallel zum Lichtbogen geschaltet sind. Fällt der Schweißstrom kurzzeitig ab, so kann die parallel geschaltete zweite Kapazität und/oder die parallel geschaltete zweite Induktivität den verglichen mit dem Stromnennwert auftretenden Stromüberschuss kurzzeitig ableiten, sofern sie die voranstehend erläuterte Dimensionierung aufweist. Erfordert der Schweißprozess kurzzeitig eine starke Erhöhung der Schweißspannung, so kann diese Spannung von der parallel geschalteten zweiten Kapazität und/oder von der parallel geschalteten zweiten Induktivität bereitgestellt werden, da an diesen Bauteilen aufgrund der Resonanzbedingung des Resonanzkonverters eine wesentlich höhere Spannung abfallen kann als am Eingang des Resonanzkonverters.

Die Dimensionierung der ersten und zweiten Kapazität bzw. der ersten und zweiten Induktivität in der voranstehend erläuterten Weise stellt sicher, dass ein stabiler Lichtbogen erzeugt werden kann, und zwar auch dann, wenn die von der einphasigen Wechselspannungsquelle bereitgestellte Eingangsspannung Momentanwerte von weniger als der Hälfte des Maximalwertes aufweist. Auch in diesen Zeitabschnitten kann selbst bei starken Schwankungen der Schweißspannung und des Schweißstroms ohne eine Überdimensionierung der Schweißstromquelle ein ausreichend hoher Schweißstrom bereitgestellt werden, so dass der Lichtbogen stabil bleibt.

Dimensioniert man das Verhältnis der ersten Kapazität zur zweiten Kapazität bei primärseitiger Anordnung der zweiten Kapazität kleiner als 1, so führt dies zu einer starken Erhöhung des Blindstroms im Resonanzkreis. Außerdem wird dadurch der verfügbare Schweißstrom bei Momentanwerten der Eingangsspannung von weniger als dem halben Maximalwert unnötig erhöht und dies wiederum führt zu einer verstärkten Oberwellenbelastung der Wechselspannungsquelle. Dimensioniert man andererseits die erste und die zweite Kapazität derart, dass das Verhältnis der ersten Kapazität zur zweiten Kapazität bei primärseitiger Anordnung der zweiten Kapazität einen Wert größer 10 aufweist, so kann der Lichtbogen nicht in allen Fällen stabil aufrechterhalten werden. Erfindungsgemäß werden daher die erste und die zweite Kapazität derart dimensioniert, dass das Verhältnis der ersten Kapazität zur zweiten Kapazität bei primärseitig angeordneter zweiter Kapazität einem Wert aus dem Bereich von 1 bis 10 entspricht. Wird die zweite Kapazität parallel zur Sekundärseite des Transformators geschaltet, so wird für die Dimensionierung der ersten und zweiten Kapazität zusätzlich das Transformationsverhalten des Transformators berücksichtigt, um dieselbe Wirkung wie bei einer primärseitigen Anordnung zu erhalten. Bei sekundärseitiger Anordnung der zweiten Kapazität erfolgt deshalb die Dimensionierung derart, dass das Verhältnis der ersten zur zweiten Kapazität dem Quotient aus einem Wert aus dem Bereich von 1 bis 10 und dem Quadrat des Übersetzungsverhältnisses des Transformators entspricht.

Beträgt das Übersetzungsverhältnis, das heißt das Verhältnis der Anzahl der Primärwindungen zur Anzahl der Sekundärwindungen, beispielsweise 2, so wird bei Anordnung der zweiten Kapazität parallel zur Sekundärseite des Transformators ein vierfach größerer Kapazitätswert verwendet als wenn die zweite Kapazität parallel zur Primärseite des Transformators angeordnet wird. Durch die Dimensionierung der sekundärseitig angeordneten zweiten Kapazität unter Berücksichtigung des Übersetzungsverhältnisses des Transformators in der voranstehend erläuterten Weise kann dieselbe Wirkung erzielt werden, als wenn die zweite Kapazität parallel zur Primärseite des Transformators geschaltet wird.

In entsprechender Weise kann bei Einsatz einer parallel zum Transformator geschalteten zweiten Induktivität die Oberwellenbelastung der Wechselspannungsquelle sehr gering gehalten werden und dennoch kann ein stabiler Lichtbogen erzeugt werden, ohne dass eine Überdimensionierung erforderlich ist, sofern das Verhältnis der zweiten Induktivität zur ersten Induktivität bei primärseitig angeordneter zweiter Induktivität einem Wert aus dem Bereich von 0,5 bis 10 entspricht. Wird die zweite Induktivität parallel zur Sekundärseite des Transformators angeordnet, so werden die zweite und die erste Induktivität derart dimensioniert, dass ihr Verhältnis dem Quotient aus einem Wert aus dem Bereich von 0,5 und 10 und dem Quadrat des Übersetzungsverhältnisses des Transformators entspricht.

Die ersten und zweiten Kapazitäten bilden ebenso wie die ersten und zweiten Induktivitäten Speicherelemente aus, die in Abhängigkeit von der Resonanzfrequenz des Resonanzkonverters Energie speichern. Beim erfindungsgemäßen Verfahren ist hierbei mindestens ein energiespeicherndes Element mit spezieller Dimensionierung parallel zum Transformator geschaltet.

Mittels des erfindungsgemäßen Verfahrens können somit am Ausgang der Schweißstromquelle eine zeitlich variierende Gleichspannung und ein zeitlich variierender Gleichstrom bereitgestellt werden, die einen stabilen Schweißprozess ermöglichen, wobei die Schweißstromquelle, insbesondere der Transformator, nur auf die Nennwerte, das heißt auf die zeitlichen Mittelwerte der Ausgangsspannung und des Ausgangsstroms ausgelegt werden muss. Dies ermöglicht eine kostengünstige Herstellung der Schweißstromquelle. Die Bereitstellung der zeitlich variierenden Werte für den Ausgangsstrom und die Ausgangsspannung hat darüber hinaus den Vorteil, dass die Oberwellenbelastung gering gehalten werden kann.

Das erfindungsgemäße Verfahren ermöglicht es, mit einer geringen Oberwellenbelastung den Schweißprozess inhärent aufrechtzuerhalten, denn bei einem starken Abfall der Ausgangsspannung kann kurzzeitig ein sehr hoher Ausgangsstrom bereitgestellt werden. Dies hat den Vorteil, dass bei Vorliegen einer sehr kurzen Lichtbogenlänge, die praktisch einen elektrischen Kurzschluss zwischen der Schweißelektrode und dem Werkstück zur Folge hat, das lichtbogenseitige Ende der Schweißelektrode durch eine starke Stromerhöhung kurzzeitig abgeschmolzen werden kann, so dass von der Schweißelektrode ein Tropfen auf das Werkstück übergeht und sich dadurch die Lichtbogenlänge wieder vergrößert und sich damit der Kurzschluss praktisch selbst beendet.

Beim erfindungsgemäßen Verfahren kann die im Resonanzfall an der parallel zum Transformator geschalteten zweiten Kapazität und/oder an der parallel zum Transformator geschalteten zweiten Induktivität auftretende Resonanzspannungserhöhung auf den Schweißprozess transferiert werden. Die Schweißspannung kann sich somit unabhängig von der Eingangsspannung des Resonanzkonverters einstellen, so dass die Lichtbogenstabilität ohne Überdimensionierung oder Zusatzschaltungen auf einfache Weise kostengünstig sichergestellt werden kann. Gleichzeitig kann die Oberwellenbelastung der einphasigen Wechselspannungsquelle, an die die Schweißstromquelle angeschlossen ist, gering gehalten werden.

Ein weiterer Vorteil des erfindungsgemäßen Verfahrens liegt darin, dass mit seiner Hilfe die sogenannte Blaswirkung reduziert werden kann. Hierbei handelt es sich um einen magnetischen Effekt, der beim Lichtbogenschweißen auftritt. Er erklärt sich durch die magnetischen Feldlinien, die von Strom durchflossenen Leitern, zu denen der Lichtbogen, die Schweißelektrode, Verbindungskabel und auch das Werkstück gehören, erzeugt werden. Die Feldlinien üben auf die Leiter eine Ablenkkraft aus. Beispielsweise wird der Lichtbogen von Kanten des Werkstücks weggelenkt. Durch die magnetische Blaswirkung kann die Güte einer Schweißnaht beeinträchtigt werden. Die magnetische Blaswirkung tritt insbesondere beim Schweißen mit Gleichstrom auf. Da beim erfindungsgemäßen Verfahren der Ausgangsstrom der Schweißstromquelle pulsiert, weist er einen zeitlich konstanten Gleichstromanteil und einen überlagerten Wechselstromanteil auf. Letzterer induziert im Werkstück Wirbelströme, die die magnetische Blaswirkung reduzieren.

Von Vorteil ist es, wenn man die erste und die zweite Kapazität derart dimensioniert, dass das Verhältnis der ersten Kapazität zur zweiten Kapazität bei primärseitig angeordneter zweiten Kapazität einem Wert aus dem Bereich von 1 bis 5 entspricht, insbesondere einem Wert von 3.

Kommt mindestens eine zweite Induktivität zum Einsatz, so dimensioniert man die erste und zweite Induktivität günstigerweise derart, dass das Verhältnis der zweiten Induktivität zur ersten Induktivität bei primärseitig angeordneter zweiten Induktivität einem Wert aus dem Bereich von 0,5 bis 5 entspricht, insbesondere einem Wert von 3.

Der Transformator wird günstigerweise derart dimensioniert, dass das Übersetzungsverhältnis des Transformators größer als 1 ist. Das Übersetzungsverhältnis des Transformators, das heißt das Verhältnis der Anzahl der Primärwindungen zur Anzahl der Sekundärwindungen, definiert das Verhältnis der Primär- und Sekundärspannungen des Transformators. Wird ein Übersetzungsverhältnis größer 1 gewählt, so kann eine Eingangsspannung auf eine geringere Ausgangsspannung transformiert werden.

Es kann beispielsweise vorgesehen sein, dass man den Transformator derart dimensioniert, dass das Übersetzungsverhältnis des Transformators 10 beträgt. Dies ermöglicht es, eine Eingangsspannung mit einem zeitlichen Mittelwert von 250 V auf eine Ausgangsspannung mit einem zeitlichen Mittelwert von 25 V zu transformieren. Ein Eingangsstrom mit einem zeitlichen Mittelwert von 15 A wird bei einer derartigen Dimensionierung auf einen Ausgangsstrom mit einem zeitlichen Mittelwert von 150 A transferiert.

Besonders kostengünstig kann die Schweißstromquelle hergestellt werden, wenn die Streuinduktivität zwischen der Primär- und der Sekundärwicklung des Transformators als erste Induktivität des Schwingkreises genutzt wird. Ein separates Bauelement für die erste Induktivität kann dadurch entfallen.

Von Vorteil ist es, wenn man eine zweite Kapazität parallel zur Sekundärseite des Transformators schaltet.

Wie bereits erwähnt, betrifft die Erfindung auch eine Schweißstromquelle zur Durchführung des voranstehend genannten Verfahrens. Damit die Schweißstromquelle kostengünstig herstellbar ist und eine geringe Oberwellenbelastung aufweist, wird erfindungsgemäß vorgeschlagen, dass die Schweißstromquelle eine zweite Kapazität und/oder eine zweite Induktivität aufweist, die parallel zum Transformator geschaltet ist oder dass die zweite Induktivität als Magnetisierungsinduktivität des Transformators ausgebildet ist, wobei das Verhältnis der ersten Kapazität zur zweiten Kapazität bei primärseitig angeordneter zweiter Kapazität einem Wert aus dem Bereich von 1 bis 10 entspricht und bei sekundärseitig angeordneter zweiter Kapazität dem Quotient aus einem Wert aus dem Bereich von 1 bis 10 und dem Quadrat des Übersetzungsverhältnisses des Transformators entspricht, und/oder wobei das Verhältnis der zweiten Induktivität zur ersten Induktivität bei primärseitig angeordneter zweiter Induktivität einem Wert aus dem Bereich von 0,5 bis 10 entspricht und bei sekundärseitig angeordneter zweiter Induktivität dem Quotient aus einem Wert aus dem Bereich von 0,5 bis 10 und dem Quadrat des Übersetzungsverhältnisses des Transformators entspricht.

Wie voranstehend bereits im Einzelnen erläutert, zeichnet sich die erfindungsgemäße Schweißstromquelle durch den kombinierten Einsatz einer passiven Leistungsfaktor-Korrekturschaltung und eines Resonanzkonverters aus, bei dem eine zweite Kapazität und/oder eine zweite Induktivität parallel zum Transformator geschaltet sind. Hierbei sind die erste und die zweite Kapazität bzw. die erste und zweite Induktivität in der voranstehend erläuterten Weise dimensioniert. Dadurch ist sichergestellt, dass die Schweißstromquelle eine geringe Oberwellenbelastung aufweist und dennoch einen stabilen Lichtbogen bereitstellen kann. Außerdem hat die erfindungsgemäße Schweißstromquelle den Vorteil, dass die Bauteile der Schweißstromquelle auf die Nennwerte des Schweißstroms und der Schweißspannung ausgelegt werden können, das heißt auf die zeitlichen Mittelwerte. Eine Überdimensionierung der Bauteile ist nicht erforderlich. Kurzzeitig auftretenden Minimal- und Maximalwerten der Schweißspannung und des Schweißstroms wird die erfindungsgemäße Schweißstromquelle durch die Bereitstellung einer parallel zum Transformator geschalteten zweiten Kapazität und/oder einer parallel zum Transformator geschalteten zweiten Induktivität gerecht, die die voranstehend genannte Dimensionierungen aufweisen. Die zweite Kapazität und/oder die zweite Induktivität sind parallel zum Lichtbogen geschaltet. Fällt der Schweißstrom kurzzeitig ab, so kann die parallel geschaltete Kapazität/Induktivität den verglichen mit dem Stromnennwert auftretenden Stromüberschuss kurzzeitig ableiten. Erfordert der Schweißprozess kurzzeitig eine starke Erhöhung der Schweißspannung, so kann diese Spannung von der parallel geschalteten Kapazität/Induktivität bereitgestellt werden, da an diesen Bauteilen aufgrund der Resonanzbedingung des Resonanzkonverters eine wesentlich höhere Spannung abfallen kann als am Eingang des Resonanzkonverters. Voraussetzung hierfür ist die voranstehend erläuterte Dimensionierung der zweiten Kapazität bzw. der zweiten Induktivität.

Als parallel zum Transformator geschaltete zweite Induktivität kann die Magnetisierungsinduktivität des Transformators zum Einsatz kommen.

Die erste Kapazität und die erste Induktivität des Schwingkreises sind vorzugsweise in Reihe zur Primärseite des Transformators geschaltet.

Bei einer vorteilhaften Ausführungsform der erfindungsgemäßen Schweißstromquelle weist der Transformator ein Übersetzungsverhältnis größer 1 auf.

Wie bereits erläutert, ist es von Vorteil, wenn das Übersetzungsverhältnis des Transformators beispielsweise 10 beträgt.

Bei einer vorteilhaften Ausführungsform der erfindungsgemäßen Schweißstromquelle ist parallel zum Transformator eine einzige zweite Kapazität geschaltet.

Es kann vorgesehen sein, dass parallel zum Transformator eine einzige zweite Induktivität geschaltet ist.

Günstigerweise ist die zweite Kapazität parallel zur Sekundärseite des Transformators geschaltet.

Als erste Induktivität des Schwingkreises der erfindungsgemäßen Schweißstromquelle kommt günstigerweise die Streuinduktivität zwischen der Primärund der Sekundärwicklung des Transformators zum Einsatz. Eine als separates Bauelement ausgebildete erste Induktivität kann dadurch entfallen.

Passive Leistungsfaktor-Korrekturschaltungen sind dem Fachmann an sich bekannt. Bevorzugt weist die bei der erfindungsgemäßen Schweißstromquelle zum Einsatz kommende passive Leistungsfaktor-Korrekturschaltung zwei parallel zueinander geschaltete Strompfade auf, wobei in jedem Strompfad eine Diode und eine Kapazität in Reihe zueinander geschaltet sind und die beiden Strompfade im Bereich zwischen den Dioden und Kapazitäten über eine Verbindungsleitung miteinander verbunden sind, wobei in die Verbindungsleitung lediglich eine weitere Diode geschaltet ist. Der Einsatz von Ohmschen Widerständen kann somit bei der Leistungsfaktor-Korrekturschaltung entfallen.

Die nachfolgende Beschreibung einer vorteilhaften Ausführungsform des erfindungsgemäßen Verfahrens und der erfindungsgemäßen Schweißstromquelle dient im Zusammenhang mit der Zeichnung der näheren Erläuterung. Es zeigen:
- Figur 1:: ein Blockschaltbild einer Schweißstromquelle und
- Figur 2:: ein Ausgangskennlinienfeld der Schweißstromquelle aus Figur 1.

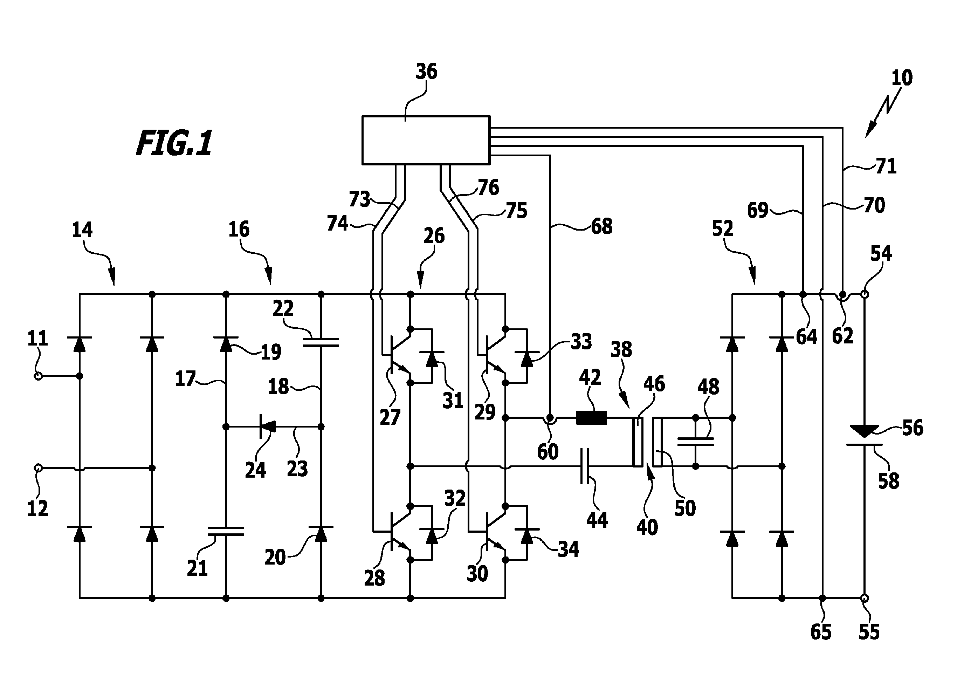

In Figur 1 ist schematisch ein vereinfachtes Blockschaltbild einer vorteilhaften Ausführungsform einer erfindungsgemäßen Schweißstromquelle dargestellt, die insgesamt mit dem Bezugszeichen 10 belegt ist. Sie umfasst zwei Spannungsversorgungsanschlüsse 11, 12, die an eine einphasige Wechselspannungsquelle, insbesondere an ein öffentliches Spannungsversorgungsnetz, angeschlossen werden können. Die beiden Spannungsversorgungsanschlüsse 11, 12 bilden den Eingang einer ersten Gleichrichterschaltung 14, die im dargestellten Ausführungsbeispiel als Brückengleichrichter ausgebildet ist. Mittels der ersten Gleichrichterschaltung 14 kann die an den Spannungsversorgungsanschlüssen 11, 12 anliegende einphasige Wechselspannung gleichgerichtet werden. Um die Restwelligkeit der gleichgerichteten Spannung zu reduzieren, schließt sich an die erste Gleichrichterschaltung 14 eine Leistungsfaktor-Korrekturschaltung 16 an mit einem ersten Strompfad 17 und einem parallel zu diesen geschalteten zweiten Strompfad 18, in die jeweils eine Diode 19 bzw. 20 und in Reihe zu dieser eine Kapazität 21 bzw. 22 geschaltet sind. Im Bereich zwischen den Dioden und Kapazitäten sind die beiden Strompfade 17, 18 über eine Verbindungsleitung 23 miteinander verbunden, in die eine weitere Diode 24 geschaltet ist.

Der Leistungsfaktor-Korrekturschaltung 16 nachgeordnet ist eine getaktete Brückenschaltung 26, die von der Leistungsfaktor-Korrekturschaltung 16 mit einer pulsierenden Gleichspannung versorgt wird. Die Brückenschaltung 26 ist als Vollbrücke ausgebildet und weist vier Schaltelemente 27, 28, 29, 30 auf, denen jeweils eine Freilaufdiode 31, 32, 33, 34 zugeordnet ist. Derartige Brückenschaltungen 26 sind dem Fachmann an sich bekannt und bedürfen daher vorliegend keiner näheren Erläuterung. Die Steuerung der Brückenschaltung 26 erfolgt mit Hilfe einer Steuereinheit 36, die die Schaltelemente 27, 28, 29, 30 so ansteuert, dass die Brückenschaltung 26 eine hochfrequente Wechselspannung bereitstellt mit einer variablen Frequenz und einer variablen Pulsbreite.

Der Brückenschaltung 26 nachgeordnet ist ein Resonanzkonverter 38 mit einem Transformator 40 und mit insgesamt drei unabhängigen, in Abhängigkeit von der Frequenz des Resonanzkonverters 38 energiespeichernden Elementen. Ein erstes energiespeicherndes Element ist in Form einer ersten Induktivität 42 ausgebildet, die ebenso wie ein zweites energiespeicherndes Element in Form einer ersten Kapazität 44 in Reihe zu einer Primärspule 46 des Transformators 40 geschaltet ist. Das dritte energiespeichernde Element ist in Form einer zweiten Kapazität 48 ausgebildet, die parallel zur Sekundärspule 50 des Transformators 40 geschaltet ist. Die Primärspule 46 bildet in Kombination mit der ersten Induktivität 42 und der in Reihe zu dieser geschalteten ersten Kapazität 44 einen seriellen Schwingkreis aus, und die Sekundärspule 50 bildet in Kombination mit der parallel zur Sekundärspule 50 geschalteten zweiten Kapazität 48 einen parallelen Schwingkreis aus. Die in Reihe zur Primärspule 46 geschaltete erste Induktivität 42 kann als Streuinduktivität zwischen Primärspule und Sekundärspule des Transformators 40 ausgestaltet sein. Die erste Induktivität 42 muss somit nicht zwingend als separates Bauelement ausgestaltet sein.

Der Transformator 40 ist auf die Nennwerte, das heißt auf die zeitlichen Mittelwerte des Ausgangsstroms und der Ausgangsspannung der Schweißstromquelle 10 ausgelegt. Das Übersetzungsverhältnis des Transformators 40, also das Verhältnis der Anzahl der Primärwindungen zur Anzahl der Sekundärwindungen, ist größer 1, im dargestellten Ausführungsbeispiel beträgt das Übersetzungsverhältnis etwa 10, so dass eine primärseitige Nennspannung von etwa 250 V auf eine sekundärseitige Nennspannung von etwa 25 V transformiert wird. In entsprechender Weise wird ein primärseitiger Nennstrom von etwa 15 A auf einen sekundärseitigen Nennstrom von etwa 150 A transformiert. Kurzzeitig treten allerdings an der parallel zur Sekundärspule 50 geschalteten Kapazität 48 erheblich höhere Spannungen auf aufgrund der sich im Resonanzkonverter 38 ausbildenden Resonanzschwingung.

Die erste Kapazität 44 und die zweite Kapazität 48 sind derart dimensioniert, dass das Verhältnis der ersten Kapazität 44 zur zweiten Kapazität 48 einen Wert aufweist, der dem Quotient aus einem Wert aus dem Bereich von 1 bis 10 und dem Quadrat des Übersetzungsverhältnisses des Transformators 40 entspricht. Das Übersetzungsverhältnis des Transformators 40 beträgt im dargestellten Ausführungsbeispiel 10. Somit beträgt das Quadrat des Übersetzungsverhältnisses 100 und der Quotient aus einem Wert aus dem Bereich zwischen 1 und 10 und dem Quadrat des Übersetzungsverhältnisses des Transformators 40 liegt somit im Bereich von 0,01 bis 0,1. Das Verhältnis der ersten Kapazität 44 zur zweiten Kapazität 48 weist deshalb einen Wert auf im Bereich von 0,01 und 0,1. Es kann beispielsweise vorgesehen sein, dass das Verhältnis der ersten Kapazität 44 zur zweiten Kapazität 48 0,03 beträgt. Wird statt dessen die zweite Kapazität 48 in einer alternativen Ausgestaltung der Schweißstromquelle 10 parallel zur Primärseite des Transformators 40 geschaltet, so weist das Verhältnis der ersten Kapazität 44 zu der primärseitig angeordneten zweiten Kapazität 48 einen Wert aus dem Bereich von 1 bis 10 auf, günstigerweise einen Wert von 3.

Dem Resonanzkonverter 38 nachgeordnet ist eine zweite Gleichrichterschaltung 52, die ebenfalls als Brückengleichrichter ausgestaltet ist und die vom Resonanzkonverter 38 bereitgestellte Wechselspannung gleichrichtet. Die gleichgerichtete Ausgangsspannung liegt an Ausgangsklemmen 54, 55 der Schweißstromquelle 10 an. An die Ausgangsklemmen 54, 55 können in üblicher Weise eine Schweißelektrode 56 und ein zu schweißendes Werkstück 58 angeschlossen werden, so dass sich zwischen der Schweißelektrode 56 und dem Werkstück 58 ein Lichtbogen ausbildet, unter dessen Wirkung Werkstoff von der Schweißelektrode 56 auf das Werkstück 58 übergehen kann.

Die Länge des Lichtbogens und damit dessen Widerstand unterliegen zeitlichen Schwankungen. Dies hat zur Folge, dass auch die an den Ausgangsklemmen 54, 55 anliegende Ausgangsspannung sowie der zur Schweißelektrode 56 fließende Ausgangsstrom Schwankungen unterliegt. Diese Schwankungen werden von der Steuereinheit 36 ebenso erfasst wie Schwankungen des Primärstroms des Transformators 40, das heißt Schwankungen des Stromes, der über die Primärspule 46 fließt. Die Steuereinheit 36 ist hierzu über Eingangsleitungen 68, 69, 70, 71 mit einem Primärstromsensor 60, der den im seriellen Schwingkreis fließenden Strom erfasst, sowie mit einem Ausgangsstromsensor 62, der den Ausgangsstrom der Schweißstromquelle 10 erfasst, und mit den Ausgangsklemmen 54, 55 verbunden, so dass die Steuereinheit 36 auch die Ausgangsspannung der Schweißstromquelle 10 erfassen kann. Aufgrund der erfassten Strom- und Spannungswerte steuert die Steuereinheit 36 die Schaltelemente 27, 28, 29, 30 der getakteten Brückenschaltung 26. Hierzu ist die Steuereinheit 36 über Steuerleitungen 73, 74, 75, 76 mit den Schaltelementen 27, 28, 29 und 30 verbunden.

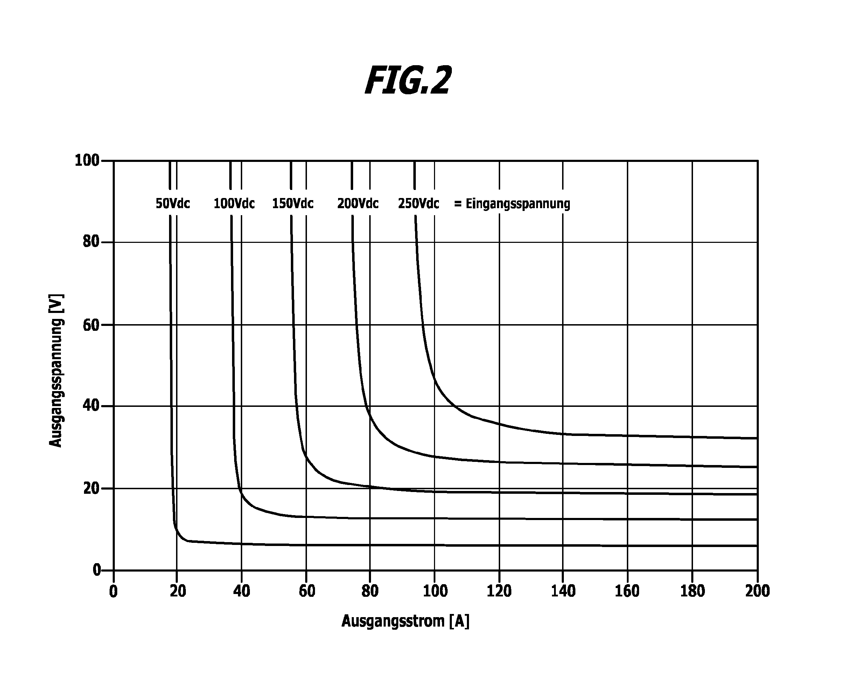

Die Ausgangsspannung und der Ausgangsstrom, die die Schweißstromquelle 10 bereitstellt, sind abhängig von der am Eingang der Brückenschaltung 26 anliegenden Eingangsspannung, das heißt sie sind abhängig von der Spannung, die die passive Leistungsfaktor-Korrekturschaltung bereitstellt. Das Ausgangskennlinienfeld der Schweißstromquelle 10 ist in Figur 2 dargestellt und gibt den Zusammenhang wieder zwischen der Ausgangsspannung und dem Ausgangsstrom der Schweißstromquelle in Abhängigkeit von unterschiedlichen Eingangsspannungen. Es wird deutlich, dass sich bei gleichbleibender Ausgangsspannung die Eingangsspannung reduzieren kann. Bei gleichbleibender Ausgangsspannung reduziert sich der Ausgangsstrom so weit, dass die sich daraus ergebende geringere Lichtbogenleistung dem Übertragungsverhalten des Resonanzkonverters 38 entspricht. In Abhängigkeit von der Eingangsspannung kann ein bestimmter Ausgangsstrom annähernd unabhängig von der Höhe der Ausgangsspannung aufrechterhalten werden. So kann zum Beispiel bei einer Eingangsspannung von 100 V noch ein Ausgangsstrom von knapp 40 A annähernd unabhängig von der Ausgangsspannung sichergestellt werden. Es ergibt sich somit eine inhärente Konstantstromcharakteristik, welche für die Stabilität des Lichtbogens sehr vorteilhaft ist.

Aus dem Ausgangskennlinienfeld gemäß Figur 2 wird auch deutlich, dass sich der Ausgangsstrom bei absinkender Ausgangsspannung stark erhöhen kann. Die Ausgangsspannung sinkt, wenn sich der Lichtbogenwiderstand verringert. Die absinkende Ausgangsspannung führt zu einer starken Erhöhung des Ausgangsstroms und dadurch zum Abschmelzen der Schweißelektrode, so dass sich anschließend wieder ein größerer Lichtbogenwiderstand ausbildet und sich die Ausgangsspannung erhöht. Einem sich ausbildenden Kurzschluss zwischen der Schweißelektrode und dem Werkstück wirkt somit die Charakteristik der Schweißstromquelle 10 entgegen.

Die Schweißstromquelle 10 stabilisiert somit einen Lichtbogen zwischen der Schweißelektrode und dem Werkstück und erleichtert damit dem Schweißer den Schweißvorgang. Darüber hinaus hat die Schweißstromquelle 10 den Vorteil, dass sie nur eine geringe Oberwellenbelastung aufweist, das heißt das Spannungsversorgungsnetz, an das die Schweißstromquelle 10 angeschlossen wird, wird von der Schweißstromquelle 10 nur gering mit Oberwellen belastet.

Im dargestellten Ausführungsbeispiel ist die parallel zum Transformator 40 geschaltete zweite Kapazität 48 an der Sekundärseite des Transformators 40 angeordnet. Dies ist jedoch nicht zwingend erforderlich. Wie bereits erwähnt, könnte die zweite Kapazität 48 auch an der Primärseite des Transformators 40 angeordnet sein. Außerdem könnte alternativ oder ergänzend zu der parallel zum Transformator 40 geschalteten zweiten Kapazität 48 auch eine parallel zum Transformator 40 geschaltete zweite Induktivität zum Einsatz kommen, die wahlweise an der Primärseite oder an der Sekundärseite des Transformators 40 angeordnet sein kann. Um kurzzeitigen Schwankungen des Schweißprozesses gerecht zu werden, sollte jedenfalls zusätzlich zu den in Reihe zueinander geschalteten ersten und zweiten Resonanzelementen in Form der ersten Induktivität 42 und der ersten Kapazität 44 ein parallel zum Transformator 40 geschaltetes drittes Resonanzelement in Form einer zweiten Induktivität oder zweiten Kapazität mit der voranstehend erläuterten Dimensionierung zum Einsatz kommen. Die Anordnung dieses dritten Resonanzelementes parallel zum Transformator stellt sicher, dass das dritte Resonanzelement parallel zur Last der Schweißstromquelle 10, das heißt parallel zum Lichtbogen geschaltet ist. Die Resonanzspannung, die am dritten Resonanzelement anliegt, kann somit auch dem Schweißprozess zur Verfügung gestellt werden und Schwankungen des Schweißstroms können kompensiert werden, indem der Strom auch über das dritte Resonanzelement fließen kann, das parallel zum Schweißprozess angeordnet ist.

Die Schweißstromquelle 10 stellt somit einen pulsierenden Schweißstrom zur Verfügung. In Kombination mit dem Einsatz der passiven Leistungsfaktor-Korrekturschaltung 16 ermöglicht dies, die Oberwellenbelastung sehr gering zu halten. Darüber hinaus hat der pulsierende Schweißstrom den Vorteil, dass die sogenannte Blaswirkung gering gehalten werden kann. Hierbei handelt es sich um einen magnetischen Effekt, der beim Lichtbogenschweißen auftritt und zur Folge hat, dass der Lichtbogen beispielsweise von Werkstückkanten weg abgelenkt wird. Die Reduzierung der Blaswirkung ergibt sich aus den im Werkstück induzierten Wirbelströmen, die entgegengesetzt zum Schweißstrom verlaufen. Das durch die Wirkbelströme erzeugte Magnetfeld hat die Tendenz, das vom Lichtbogen erzeugte Magnetfeld zu kompensieren. Der von der Schweißstromquelle 10 bereitgestellte pulsierende Schweißstrom weist einen Wechselstromanteil auf, der dem Gleichstrom überlagert ist, dieser Wechselstromanteil reduziert die Blaswirkung.

## Patentansprüche

1. Verfahren zum Minimieren der durch eine Schweißstromquelle (10) hervorgerufenen Oberwellenbelastung einer einphasigen Wechselspannungsquelle, wobei die Schweißstromquelle (10) eine an die Wechselspannungsquelle anschließbare erste Gleichrichterschaltung (14), eine an den Ausgang der ersten Gleichrichterschaltung (14) angeschlossene Leistungsfaktor-Korrekturschaltung (16), eine an den Ausgang der Leistungsfaktor-Korrekturschaltung (16) angeschlossene getaktete Brückenschaltung (26), einen an den Ausgang der getakteten Brückenschaltung (26) angeschlossenen Resonanzkonverter (38) und eine an den Ausgang des Resonanzkonverters (38) angeschlossene zweite Gleichrichterschaltung (52) aufweist, an deren Ausgang eine Schweißelektrode (56) und ein zu schweißendes Werkstück (58) anschließbar sind, wobei der Resonanzkonverter (38) einen Transformator (40) und einen Schwingkreis mit einer ersten Kapazität (44) und einer in Reihe zur ersten Kapazität (44) geschalteten ersten Induktivität (42) aufweist, **dadurch gekennzeichnet, dass** man eine zweite Kapazität (48) und/oder eine zweite Induktivität parallel zur Primär- oder Sekundärseite des Transformators schaltet oder dass man die Magnetisierungsinduktivität des Transformators (40) als zweite Induktivität nutzt, wobei man die erste und die zweite Kapazität (44, 48) derart dimensioniert, dass das Verhältnis der ersten Kapazität (44) zur zweiten Kapazität (48) bei primärseitig angeordneter zweiter Kapazität (48) einem Wert aus dem Bereich von 1 bis 10 entspricht und bei sekundärseitig angeordneter zweiter Kapazität (48) dem Quotient aus einem Wert aus dem Bereich von 1 bis 10 und dem Quadrat des Übersetzungsverhältnisses des Transformators (40) entspricht, und/oder wobei man die erste und die zweite Induktivität derart dimensioniert, dass das Verhältnis der zweiten Induktivität zur ersten Induktivität (42) bei primärseitig angeordneter zweiter Induktivität einem Wert aus dem Bereich von 0,5 bis 10 entspricht und bei sekundärseitig angeordneter zweiter Induktivität dem Quotient aus einem Wert aus dem Bereich von 0,5 bis 10 und dem Quadrat des Übersetzungsverhältnisses des Transformators (40) entspricht.

2. Verfahren nach Anspruch 1, **dadurch gekennzeichnet, dass** man die erste und die zweite Kapazität (44, 48) derart dimensioniert, dass das Verhältnis der ersten Kapazität (44) zur zweiten Kapazität (48) bei primärseitig angeordneter zweiter Kapazität (48) einem Wert aus dem Bereich von 1 bis 5 entspricht, insbesondere einem Wert von 3.

3. Verfahren nach Anspruch 1 oder 2, **dadurch gekennzeichnet, dass** man die erste und die zweite Induktivität derart dimensioniert, dass das Verhältnis der zweiten Induktivität zur ersten Induktivität (42) bei primärseitig angeordneter zweiter Induktivität einem Wert aus dem Bereich von 0,5 bis 5 entspricht, insbesondere einem Wert von 3.

4. Verfahren nach einem der voranstehenden Ansprüche, **dadurch gekennzeichnet, dass** man den Transformator (40) derart dimensioniert, dass das Übersetzungsverhältnis des Transformators (40) größer als 1 ist.

5. Verfahren nach einem der voranstehenden Ansprüche, **dadurch gekennzeichnet, dass** man die Streuinduktivität zwischen der Primär- und der Sekundärwicklung des Transformators (40) als erste Induktivität nutzt.

6. Schweißstromquelle mit einer ersten Gleichrichterschaltung (14), die eingangsseitig an eine einphasige Wechselspannungsquelle anschließbar ist und die ausgangsseitig über eine passive Leistungsfaktor-Korrekturschaltung (16) mit einer getakteten Brückenschaltung (26) verbunden ist, und mit einem Resonanzkonverter (38), der einen Transformator (40) und einen Schwingkreis mit einer ersten Kapazität (44) und einer in Reihe zur ersten Kapazität (44) geschalteten ersten Induktivität (42) aufweist und der primärseitig mit der Brückenschaltung (26) und sekundärseitig mit einer zweiten Gleichrichterschaltung (52) verbunden ist, an deren Ausgang eine Schweißelektrode (56) und ein zu schweißendes Werkstück (58) anschließbar sind, **dadurch gekennzeichnet, dass** parallel zum Transformator (40) eine zweite Kapazität (48) und/oder eine zweite Induktivität geschaltet ist oder dass die zweite Induktivität als Magnetisierungsinduktivität des Transformators (40) ausgebildet ist, wobei das Verhältnis der ersten Kapazität (44) zur zweiten Kapazität (48) bei primärseitig angeordneter zweiter Kapazität (48) einem Wert aus dem Bereich von 1 bis 10 entspricht und bei sekundärseitig angeordneter zweiter Kapazität (48) dem Quotient aus einem Wert aus dem Bereich von 1 bis 10 und dem Quadrat des Übersetzungsverhältnisses des Transformators (40) entspricht, und/oder wobei das Verhältnis der zweiten Induktivität zur ersten Induktivität (42) bei primärseitig angeordneter zweiter Induktivität einem Wert aus dem Bereich von 0,5 bis 10 entspricht und bei sekundärseitig angeordneter zweiter Induktivität dem Quotient aus einem Wert aus dem Bereich von 0,5 bis 10 und dem Quadrat des Übersetzungsverhältnisses des Transformators (40) entspricht.

7. Schweißstromquelle nach Anspruch 6, **dadurch gekennzeichnet, dass** der Transformator ein Übersetzungsverhältnis größer 1 aufweist.

8. Schweißstromquelle nach Anspruch 6 oder 7, **dadurch gekennzeichnet, dass** parallel zum Transformator (40) eine einzige zweite Kapazität (48) geschaltet ist.

9. Schweißstromquelle nach Anspruch 8, **dadurch gekennzeichnet, dass** die zweite Kapazität (48) parallel zur Sekundärseite des Transformators (40) geschaltet ist.

10. Schweißstromquelle nach einem der Ansprüche 6 bis 9, **dadurch gekennzeichnet, dass** der Schwingkreis eine erste Induktivität aufweist in Form einer Streuinduktivität zwischen der Primär- und der Sekundärwicklung des Transformators (40).

11. Schweißstromquelle nach einem der Ansprüche 6 bis 10, **dadurch gekennzeichnet, dass** parallel zum Transformator (40) eine einzige zweite Induktivität geschaltet ist.

12. Schweißstromquelle nach einem der Ansprüche 6 bis 11, **dadurch gekennzeichnet, dass** die erste Kapazität (44) und die erste Induktivität (42) in Reihe zur Primärseite des Transformators (40) geschaltet sind.

13. Schweißstromquelle nach einem der Ansprüche 6 bis 12, **dadurch gekennzeichnet, dass** die passive Leistungsfaktor-Korrekturschaltung (16) zwei parallel zueinander geschaltete Strompfade (17, 18) aufweist, wobei in jedem Strompfad (17, 18) eine Diode (19, 20) und eine Kapazität (21, 22) in Reihe zueinander geschaltet sind und die beiden Strompfade (17, 18) im Bereich zwischen den Dioden (19, 20) und den Kapazitäten (21, 22) über eine Verbindungsleitung (23) miteinander verbunden sind, in die lediglich eine weitere Diode geschaltet ist.
